# EUROPÄISCHE PATENTSCHRIFT

(11) **EP 2 367 459 B1**
(45) Veröffentlichungstag und Bekanntmachung des Hinweises auf die Patenterteilung: **14.11.2012**
(21) Anmeldenummer: 09795328.5
(22) Anmeldetag: 09.12.2009
(51) Int. Cl.: A47B 13/00, B32B 3/10, B32B 9/00, E04F 13/00, E04F 15/00

(54) **EINRICHTUNGSGEGENSTAND MIT EINEM MEHRSCHICHTSYSTEM ZUR BEREITSTELLUNG EINER ELEKTRISCHEN FUNKTIONALITÄT**
ARRANGEMENT HAVING A MULTILAYER SYSTEM FOR PROVIDING AN ELECTRICAL FUNCTION
OBJET D'AMÉNAGEMENT AVEC UN SYSTÈME À COUCHES MULTIPLES DESTINÉ À FOURNIR UNE FONCTIONNALITÉ ÉLECTRIQUE

(30) Priorität: 23.12.2008 DE 102008062809
(43) Veröffentlichungstag der Anmeldung: 28.09.2011
(73) Patentinhaber: Fraunhofer-Gesellschaft zur Förderung der angewandten Forschung e.V., 80686 München (DE); Surteco SE, 86647 Buttenwiesen-Pfaffenhofen (DE)
(72) Erfinder: BOCK, Karlheinz, 82239 Alling (DE); SCHUNCK, Stephan, 45964 Gladbeck (DE)
(74) Vertreter: Burger, Markus
(86) Internationale Anmeldenummer: PCT/EP2009/008802
(87) Internationale Veröffentlichungsnummer: WO 2010/072332

(56) Entgegenhaltungen:
- DE-C1- 4 242 196
- DE-U1-202006 007 482
- JP-A- 2008 021 183
- US-A- 6 042 244

## Beschreibung

Ausführungsbeispiele gemäß der Erfindung beziehen sich auf einen Einrichtungsgegenstand mit einem Mehrschichtsystem zur Bereitstellung einer elektrischen Funktionalität und ein Verfahren zur Herstellung eines Mehrschichtsystems zur Bereitstellung einer elektrischen Funktionalität für einen Einrichtungsgegenstand.

Dies beinhaltet beispielsweise die Integration von elektrischen Elementen in Möbeloberflächen, Fußbodenbelägen, Wandverkleidungen und Deckenverkleidungen.

Bei der Herstellung von Möbeloberflächen, Fußbodenlaminaten oder ähnlichem werden derzeit beispielsweise bedruckte Dekorpapiere oder Dekorfolien, z. B. auf Basis von Papier oder Thermoplasten, wie Polypropylen PP, Polyvinylchlorid PVC oder ähnlichen, verwendet, die in einem Laminiervorgang und/oder Kaschiervorgang unter Verwendung von Harzen mit Spanplatten oder MDF-Platten (mitteldichte Holzfaserplatten) oder anderen Trägern verbunden werden. Dadurch entstehen mechanisch beanspruchbare dekorative Oberflächen, die in der Möbelindustrie weitläufig Verwendung finden.

Eine Kaschierung ist dabei eine Verbindung zweier Materialien mittels einer Leimfuge, Druck und/oder Temperatur. Eine Laminierung ist eine Verbindung zweier ähnlicher Materialien, wie z. B. zweier thermoplastischer Folien, mittels Temperatur.

Um eine Laminatplatte zu erhalten, werden z.B. mehrere harzgetränkte Papiere unter Druck und Temperatur miteinander verpresst. Als Harze werden beispielsweise Melamin- und Phenol-Harze verwendet. Für einen hochwertigen dekorativen Schichtstoff, wie er z. B. bei Laminatböden zum Einsatz kommt, werden folgende Schichten verwendet: Der Kern besteht aus mehreren mit Phenolharz getränkten Papieren, darüber liegt die mit Melaminharz imprägnierte Dekorschicht. An oberster Stelle wird ein sogenanntes Overlay verpresst, das aus zwei durchsichtigen mit Melaminharz getränkten Papieren besteht, zwischen denen eine Korundschicht eingeschlossen wird. Es ist auch die Anwendung von mit Korund gefüllten Overlays gebräuchlich. Auf der Unterseite wird ein Gegenzug eingesetzt, der den Effekt der Schüsselung (Verbiegen des fertigen Werkstoffes) verringert.

Generell unterscheidet man in der Herstellung verschiedene Verfahren: In der (ursprünglichen) Herstellungsweise werden Papiere im Format von bis zu 5,30 x 1,3 m bei bis zu 140 °C und einem Druck von bis zu 100 bar zusammengepresst. Der gesamte Presszyklus dauert ca. 50 Minuten (Aufwärmen, Pressen und Abkühlung). Das daraus entstehende Laminat nennt man HPL ("High Pressure Laminate", Hochdrucklaminat). Es ist von sehr hoher Qualität und Haltbarkeit. Die herstellbaren Stärken sind quasi unbegrenzt. Ein Nachteil dieses Verfahrens ist jedoch die Begrenzung des Formats auf maximal 5,30 x 1,3 m. Um auch größere Formate herstellen zu können, hat man dann ein neues Verfahren entwickelt, in dem das harzgetränkte Papier von einer Rolle abgerollt und durch die Presse kontinuierlich geführt und dabei verpresst wird. Das entstehende Laminat nennt sich CPL ("Continuous Pressure Laminate", kontinuierlicher Druck-Laminat) und ist in vielen Längen produzierbar. Nachteil dieses Verfahrens ist jedoch, dass nur bei 190 °C und einem Druck von weniger als 30 bar verpresst werden kann. Bei CPL-Anlagen ab 2000 ist es möglich, mit bis zu 70 bar zu produzieren. HPL und CPL sind hinsichtlich ihrer elastomechanischen Eigenschaften als gleichwertig anzusehen. Für CPL ist allerdings aufgrund des Produktionsprozesses die Dicke des Materials auf höchstens 1,2 mm begrenzt. CPL ist in der Herstellung (und damit auch im Verkauf) deutlich günstiger als HPL. Seit 2002, als die Firma HELD Technologie GmbH in Italien eine kontinuierlich arbeitende HPL Presse installierte, welche die zur echten HPL-Herstellung erforderlichen 70 bar spezifischen Pressdrucks dauerhaft aufbringt, ist echtes HPL auch im kontinuierlichen Verfahren herstellbar.

Des Weiteren gibt es LPL-Papiere. Das Kürzel LPL steht für "Low Pressure Laminte" (Niederdrucklaminat). Niederdruck deshalb, weil das Imprägnat mit Niederdruckpressen auf das jeweilige Trägermaterial laminiert wird. Bei Temperaturen zwischen 160 und 200°C und einem Druck von 20-40 bar beträgt die Verpresszeit hierbei 12-60 Sekunden.

Vor der Verpressung wird das Dekorpapier im bedruckten oder unbedruckten Zustand mit aminoplastischen Harzen (z.B. Melamin) durchtränkt und anschließend getrocknet. Bei Laminatfußböden dient ein Overlay-Papier aus Zellvlies und Aluminiumoxid als zusätzliche Schutzschicht. Das Melaminharz im Papier schrumpft beim Aushärten. Damit die hierdurch entstehenden Zugkräfte das Trägermaterial (zumeist Span- oder MDF-Platten) nicht verziehen, werden LPLbeschichtete Holzwerkstoffe für die Möbelanwendung symmetrisch, d.h. mit dem gleichen Aufbau auf Vorder- und Rückseite, beschichtet. Alternativ kommt beim einseitig aufgebauten Laminatboden ein Gegenzugpapier zum Einsatz.
Der Unterschied zwischen HPL/CPL und LPL besteht im höheren Druck beim Verpressen. Er beträgt ca. 70-100 bar bei Temperaturen von 130-150°C und einer Vorpresszeit von immerhin 20-50 Minuten bei Verwendung einer statischen Hochdruckpresse (HPL-Papiere) oder 30 Sekunden - 1 Minute bei kontinuierlichen Doppelband-Pressen (CPL-Papiere).

Das bedruckte bzw. unbedruckte und imprägnierte Dekorpapier wird mit einem oder mehren Kraftpapieren, die in Phenolharz getränkt wurden (Kernpapiere), verpresst. Anschließend wird der so entstehende Schichtstoff (HPL/CPL) mit dem Trägermaterial verleimt. Wegen des zusätzlichen Arbeitsschritts und des höheren Aufwands beim Verpressen sind HPL- und CPL-Oberflächen in der Herstellung kostenintensiver als LPL-Oberflächen, weisen aber auch besseren Glanz und eine höhere Abriebfestigkeit auf und sind deshalb für anspruchsvolle Oberflächen die bevorzugte Wahl. Außerdem sind die Schichtstoffe je nach Harzmodifikation in der Weiterverarbeitung nachverformbar und können über gerundete Kanten kaschiert werden (Post-Forming-Verfahren).

Alternativ dazu können Folienpapiere verwendet werden, die mittels einer Leimfuge auf die verschiedenen Trägermaterialien kaschiert werden. Als Leimstoffe kommen hierbei z.B. Polyvinylacetat (PVAC) oder Harnstoff-Formaldehydharzleim (UF-Leim) zum Einsatz.

Bestimmendes Merkmal von Folienpapieren kann z.B. sein, dass sie erst nach der Papierherstellung im bedruckten oder unbedruckten Zustand durchimprägniert werden. Man spricht daher auch von Postimprägnaten.

Gegenüber den Vorimprägnaten weisen sie eine größere Spaltfestigkeit und eine bessere Bedruckbarkeit auf.

Im Gebiet der Polytronik wird eine Vielzahl an Funktionsbeschichtungen auf Folie erzeugt, die sich dadurch auszeichnen, dass elektronische Funktionen vorzugsweise schichttechnisch hergestellt werden. Beispiele hierfür sind elektronische Schaltkreise auf der Basis organischer Halbleiter, organische Solarzellen, Displays (Anzeigegeräte) oder auch Sensoren. Gekennzeichnet sind diese Systeme dadurch, dass der Foliencharakter in Bezug auf mechanische Flexibilität und Dicke weitgehend erhalten bleibt.

Die DE 102 36 436 A1 zeigt einen flexiblen Schalter und ein Verfahren zu seiner Herstellung. In dem flexiblen Schalter ist ein Schaltkreisteil mit einer Elektrode auf einem klebenden Blatt vorgesehen. Ein Abstandsblatt mit einem Durchgangsloch, das so gelegen ist, dass es mit der Elektrode auf dem Schaltkreisteil korrespondiert, ist auf dem Schaltkreisteil vorgesehen. Ein Vorderseitenblatt mit einem vorspringenden Abschnitt ist auf dem Abschnittsblatt-vorgesehen, wobei ein Kontaktabschnitt, der auf der Innenseite des vorspringenden Abschnitts vorgesehen ist, durch das Durchgangsloch in dem Abstandsblatt mit der Elektrode auf dem Schaltkreisteil in Kontakt gebracht wird, wenn der vorspringende Abschnitt eingedrückt wird.

Des Weiteren zeigt die DE 10 2006 060 781 A1 ein organisches Leuchtmittel. Es wird ein organisches Leuchtmittel und eine Beleuchtungseinrichtung mit einem solchen Leuchtmittel angegeben. Weiterhin wird eine optische Anzeigevorrichtung, eine Notbeleuchtung, eine Kfz-Innenbeleuchtung, ein Möbelstück, ein Baumaterial, eine Verglasung und ein Display mit einem solchen Leuchtmittel bzw. mit einer Beleuchtungseinrichtung, die ein solches Leuchtmittel aufweist, angegeben.

Die DE 699 08 381 T2 beschreibt ein intelligentes elektronisches Etikett mit elektronischer Tinte. Das elektronische Etikett ist zur Anzeige von Informationen geeignet und umfasst ein oder mehrere Anzeigeschichten, ein oder mehrere Aktivierungsgitterschichten, eine Antennenschicht und eine Prozessorschicht.

Des Weiteren zeigt die EP 0 847 661 B2 eine akustische Vorrichtung mit einem Bauteil, das sich quer zu seiner Dicke erstreckt und imstande ist, in einer akustisch wirksamen Fläche aus einer Querausdehnung Biegewellen aufrechtzuerhalten, die betriebsmäßig relevante Resonanzmoden seiner natürlichen Biegewellenschwingung beinhalten, welche zu mindestens zwei konzeptionellen Frequenzen in Bezug setzbar sind, die von ausgewählten Werten zumindest zweier Parameter des Bauteils abhängig sind. Das Bauteil besitzt separate Parameter, die so vorbestimmt sind, dass Werte der so mit den Resonanzmoden in Beziehung stehenden konzeptionellen Frequenzen bei Frequenzen erhalten werden, die vorteilhaft beabstandet und verschachtelt sind, um einen gewünschten akustischen Betrieb der Vorrichtung zu erzielen.

Die Aufgabe der vorliegenden Erfindung ist es, einen Einrichtungsgegenstand mit einer elektrischen Funktionalität zu schaffen, der einfach und kostengünstig herstellbar ist.

Diese Aufgabe wird durch eine Vorrichtung gemäß Anspruch 1 und ein Verfahren gemäß Anspruch 12 gelöst.

Ein Ausführungsbeispiel gemäß der Erfindung schafft einen Einrichtungsgegenstand mit einem Mehrschichtsystem zur Bereitstellung einer elektrischen Funktionalität, der ein Verbundelement und eine Trägerschicht aufweist.

Das Verbundelement umfasst ein zumindest einschichtiges Dekoroberflächenelement und eine funktionale Schicht. Die funktionale Schicht weist ein elektrisches Element mit der elektrischen Funktionalität auf.

Die Trägerschicht ist mit dem Verbundelement mechanisch verbunden.

Einige Ausführungsbeispiele gemäß der Erfindung schaffen einen Einrichtungsgegenstand mit einem Mehrschichtsystem zur Bereitstellung einer elektrischen Funktionalität, der ein Verbundelement und eine Trägerschicht aufweist.

Das Verbundelement umfasst ein Dekoroberflächenlaminat und eine funktionale Schicht. Die funktionale Schicht weist ein elektrisches Element mit der elektrischen Funktionalität auf.

Die Trägerschicht ist mit dem Verbundelement mechanisch verbunden.

Ausführungsbeispiele gemäß der Erfindung basieren auf dem Kerngedanken, dass durch die Verwendung eines Mehrschichtsystems zur Bereitstellung der elektrischen Funktionalität eine einfache und kostengünstige Massenfertigung ermöglicht werden kann.

Bei vielen Einrichtungsgegenständen wie beispielsweise Tischoberflächen oder Fußbodenbelägen werden bereits Dekoroberflächenlaminate auf einer Trägerschicht verwendet. Durch die einfache Integration einer funktionalen Schicht zwischen dem Dekoroberflächenlaminat und der Trägerschicht kann den ansonsten gleichen Einrichtungsgegenständen eine elektrische Funktionalität gegeben werden.

Bei einigen Ausführungsbeispielen gemäß der Erfindung ist die funktionale Schicht direkt auf einer Oberfläche des Dekoroberflächenlaminats angeordnet.

Bei einigen weiteren Ausführungsbeispielen gemäß der Erfindung wird die funktionale Schicht auf einer Trägerfolie angeordnet und danach mit dem Dekoroberflächenlaminat verbunden.

Ausführungsbeispiele gemäß der Erfindung werden nachfolgend Bezug nehmend auf die beiliegenden Figuren näher erläutert. Es zeigen:
- Fig. 1: eine schematische Darstellung eines Querschnitts eines Mehrschichtsystems zur Bereitstellung einer elektrischen Funktionalität eines Einrichtungsgegenstands;
- Fig. 2: eine schematische Darstellung eines Querschnitts eines Mehrschichtsystems zur Bereitstellung einer elektrischen Funktionalität eines Einrichtungsgegenstands;
- Fig. 3: eine schematische Darstellung eines Einrichtungsgegenstands mit einem Mehrschichtsystem zur Bereitstellung einer elektrischen Funktionalität; und
- Fig. 4: ein Flussdiagramm eines Verfahrens zur Herstellung eines Mehrschichtsystems zur Bereitstellung einer elektrischen Funktionalität für einen Einrichtungsgegenstand.

Bei einem zumindest einschichtiges Dekoroberflächenelement kann es sich beispielsweise um ein Dekoroberflächenlaminat (z.B. aus mehreren Folien oder Papieren verklebtes Laminat), eine einschichtige, bedruckte Folie oder ein einschichtig, bedrucktes Papier. Zur Veranschaulichung beziehen sich die folgenden Ausführungsbeispiele auf die Verwendung eines Dekoroberflächenlaminats. Es kann jedoch stattdessen genauso jeweils eine einschichtige, bedruckte Folie oder ein einschichtig, bedrucktes Papier verwendet werden.

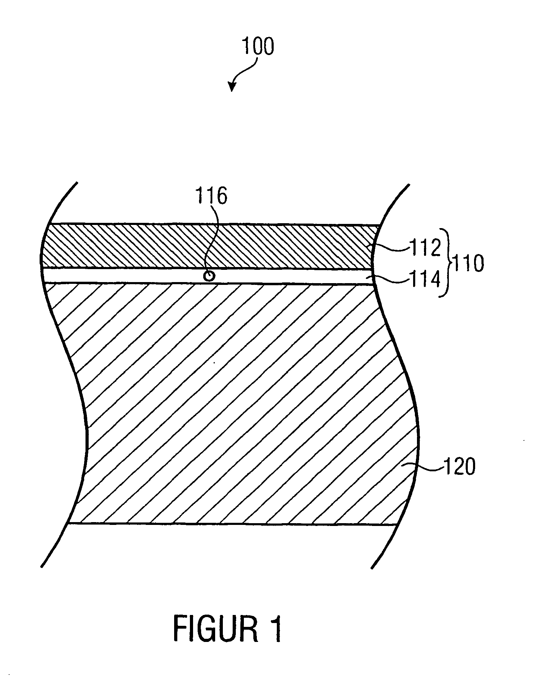

Fig. 1 zeigt eine schematische Darstellung eines Querschnitts eines Mehrschichtsystems 100 zur Bereitstellung einer elektrischen Funktionalität eines Einrichtungsgegenstands entsprechend einem Ausführungsbeispiel gemäß der Erfindung. Das Mehrschichtsystem 100 weist ein Verbundelement 110 und eine Trägerschicht 120 auf.

Das Verbundelement 110 umfasst ein Dekoroberflächenlaminat 112 und eine funktionale Schicht 114. Die funktionale Schicht 114 weist ein elektrisches Element 116 mit der elektrischen Funktionalität auf.

Die Trägerschicht 120 ist mit dem Verbundelement 110 mechanisch verbunden.

Bei dem Einrichtungsgegenstand kann es sich beispielsweise um Möbel, wie zum Beispiel einen Tisch oder einen Schrank, aber auch einen Fußbodenbelag, eine Wandverkleidung oder eine Deckenverkleidung handeln. Das Mehrschichtsystem kann dann beispielsweise einer Tischplatte oder direkt einem Fußbodenbelag entsprechen.

Die Verwendung eines Mehrschichtsystems zur Bereitstellung der elektrischen Funktionalität kann eine einfache und kostengünstige Massenfertigung ermöglichen.

Durch die Integration von elektrischen Elementen in Einrichtungsgegenstände kann eine elektrische Funktionalität an Stellen zur Verfügung gestellt werden kann, die sonst nur über Kabel erreicht werden kann. Durch die Integration der elektrischen Funktionalität in den Einrichtungsgegenstand kann die Bereitstellung der elektrischen Funktionalität ohne sichtbare Kabelführung erfolgen.

Dabei wird durch eine Seite des Dekoroberflächenlaminats das Aussehen zum Beispiel der Tischoberfläche oder der Fußbodenoberfläche bestimmt. Diese Seite kann beispielsweise aus dekorativen Gründen eine Holzmaserung oder ein anderes Muster aufweisen. Des weiteren kann diese Seite des Dekoroberflächenlaminats hergestellt werden, um erwarteten mechanischen oder chemischen Belastungen standzuhalten. Beispielsweise werden Arbeitsplatten in Küchen oder Fußböden anders belastet als normale Schreibtischoberflächen.

Zusätzlich kann das Dekoroberflächenlaminat die funktionale Schicht vor mechanischen Beschädigungen schützen.

Die funktionale Schicht 114 ist zwischen dem Dekoroberflächenlaminat 112 und der Trägerschicht 120 angeordnet und kann beispielsweise mit üblichen Verfahren der Leiterplattentechnik oder Dünnfilmtechnik hergestellt werden.

Die funktionale Schicht 114 kann eine Mehrzahl von Teilschichten aufweisen, wobei Teile der Teilschichten elektrisch leitfähig und andere Teile der Teilschichten elektrisch isolierend sind. Dadurch können beispielsweise einfach Leiterbahnen, aber auch komplexe Verdrahtungsnetzwerke, bis hin zu ganzen Schaltungen realisiert werden.

Eine Möglichkeit besteht in der Herstellung der funktionalen Schicht auf einer Trägerfolie. Die Trägerfolie mit der funktionalen Schicht wird danach mit dem Dekoroberflächenlaminat 112 zum Verbundelement 110 verbunden.

Eine alternative Möglichkeit besteht in der Herstellung der funktionalen Schicht direkt auf der zweiten Seite des Dekoroberflächenlaminats 112, die der zuvor erwähnten ersten Seite des Dekoroberflächenlaminats 112, die das Aussehen bestimmt, gegenüber liegt. Dazu muss das Dekoroberflächenlaminat 112 jedoch zum Herstellungsprozess der funktionalen Schicht 114 kompatibel sein, was z. B. die notwendigen Prozesstemperaturen anbelangt.

Durch die Verwendung einer Leiterplattentechnik, einer Dünnfilmtechnik oder einer Drucktechnik können sehr effizient und kostengünstig z. B. Leiterbahnen bis hin zu ganzen elektrischen Schaltungen auf einer Trägerfolie oder direkt auf einer Seite des Dekoroberflächenlaminats 112 integriert werden. Dadurch können in Einrichtungsgegenständen zahlreiche elektrische Funktionen, angefangen bei einer einfachen elektrischen Funktionalität, wie die Herstellung einer elektrischen Verbindung durch Leiterbahnen, bis hin zu Schaltern, Sensoren oder Leuchteinheiten, integriert werden.

Dabei können die elektrischen Elemente unterhalb des Dekoroberflächenlaminats 112 unsichtbar versteckt werden. Es ist jedoch auch möglich, dass Dekoroberflächenlaminat 112 an manchen Stellen beispielsweise transparent zu gestalten, um Leuchtflächen oder Displays, mit zum Beispiel organischen Leuchtdioden, zu integrieren.

Die Trägerschicht 120 dient der mechanischen Stabilisierung und ist je nach Art des Einrichtungsgegenstands, der Anwendung und der damit verbundenen zu erwartenden mechanischen Belastung zu dimensionieren. Die Trägerschicht 120 kann beispielsweise auch Öffnungen aufweisen, um eine elektrische Verbindung zu dem elektrischen Element 116 herzustellen.

Das in Fig. 1 gezeigte Beispiel verwendet ein Dekoroberflächenlaminat. Bei einem Laminat handelt es sich beispielsweise um zwei oder mehr Schichten, die durch Klebstoff, Hitze und/oder Druck verbunden sind. Alternativ kann für das in Fig.1 gezeigte Beispiel auch eine einzelne bedruckte und/oder beschichtete Schicht (z.B. eine einschichtige, bedruckte Folie oder ein einschichtig, bedrucktes Papier) verwendet werden.

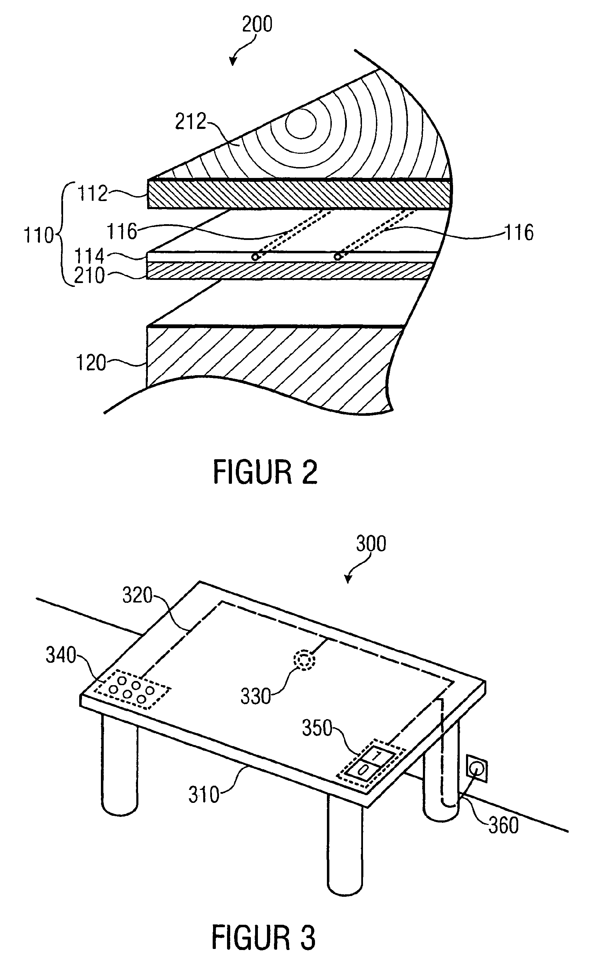

Fig. 2 zeigt eine schematische Darstellung eines Querschnitts eines Mehrschichtsystems 200 zur Bereitstellung einer elektrischen Funktionalität eines Einrichtungsgegenstands entsprechend einem Ausführungsbeispiel gemäß der Erfindung. Zur besseren Veranschaulichung sind hier das Dekoroberflächenlaminat 112 und die funktionale Schicht 114 noch nicht zum Verbundelement 110 verbunden und das Verbundelement 110 ist noch nicht mit der Trägerschicht 120 verbunden.

Das Beispiel zeigt eine funktionale Schicht 114, die auf einer Trägerfolie 210 angeordnet ist und zwei elektrische Elemente 116 in Form von zwei Leiterbahnen aufweist. Die erste Seite 212 des Dekoroberflächenlaminats 112, die einer Oberfläche des Einrichtungsgegenstands entspricht, zeigt beispielsweise eine Holzmaserung als optische Gestaltung der Oberfläche.

Der gezeigte Aufbau könnte beispielsweise einem Fußbodenbelag entsprechen, wobei durch die elektrischen Elemente 116 eine elektrische Verbindung zwischen zwei unterschiedlichen Stellen in einem Raum ermöglicht werden kann, ohne Kabel verlegen zu müssen.

Fig. 3 zeigt eine schematische Darstellung eines Einrichtungsgegenstands 300 mit einem Mehrschichtsystem zur Bereitstellung einer elektrischen Funktionalität entsprechend eine Ausführungsbeispiel gemäß der Erfindung.

Das Beispiel zeigt einen. Tisch als Einrichtungsgegenstand 300, bei dem die Tischplatte 310 als Mehrschichtsystem ausgeführt ist. Dabei sind als Beispiele für integrierte elektrische Elemente eine Planarspule 330, ein Leuchtfeld 340, ein Schalter 350 und die dazugehörige Verdrahtung 320 gezeigt.

Ein induktives Element wie z. B. die Planarspule 330 kann beispielsweise zur induktiven Kopplung mit externen Gegenständen, also Gegenständen, die sich in diesem Fall auf der Tischplatte befinden, genutzt werden. Beispielsweise kann dadurch eine Verbindung für eine Vielzahl von Endgeräten, wie beispielsweise Handys, Notebooks usw., mit Stromleitungen und/oder Datenleitungen ohne Oberflächenkabel realisiert werden.

Wird das Dekoroberflächenlaminat 112 z. B. in Bereichen von Leuchtflächen 340 optisch transparent hergestellt, können in Tischoberflächen beispielsweise Signallampen integriert werden.

Des weiteren könnten beispielsweise Schalterfunktionen 350 integriert werden. Dabei kann das Dekoroberflächenlaminat 112 zum Beispiel so ausgelegt sein, dass Belastungen, die durch eine Berührung der Tischoberfläche entstehen, an das darunterliegende elektrische Element weitergegeben werden können.

Optional ist in Fig. 3 eine elektrische Anbindung der elektrischen Elemente an das normale Stromnetz und/oder Datennetz über eine elektrische Verbindung, die in oder entlang eines Tischbeins und über ein Kabel 360 zu einem entsprechenden Strom und/oder Datenanschluss verläuft, gezeigt.

Einige Ausführungsbeispiele gemäß der Erfindung beziehen sich auf die Kombination von Dekorfolien und/oder Dekorpapieren (Dekoroberflächenlaminaten) mit funktionalen Beschichtungen (funktionalen Schichten). Dies ermöglicht beispielsweise die einfache Integration elektrischer Funktionen in Möbelplatten oder andere Produkte der holzverarbeitenden Industrie. Dabei kann z. B. auch eine Herstellung von Rolle zu Rolle oder von der Rolle ermöglicht werden.

Eine Dekorfolie ist ein Beispiel für eine einschichtige, bedruckte Folie sowie ein Dekorpapier ein Beispiel für ein einschichtiges, bedrucktes Papier ist. Allgemein kann das Bedrucken von solchen Folien oder Papieren z.B. mit Siebdruck, Tintenstrahl oder anderen Druckverfahren (Offset-, Tief- oder Hochdruck) erfolgen.

Zusätzlich können mit leitfähigen (z.B. metallgefüllten, kohlenstoffhaltigen oder polymeren) Tinten oder Pasten elektrisch leitfähige Bahnen hergestellt werden. Das Beschichten kann auch ganzflächig mit anschließender Strukturierung durch Fotolithografie erfolgen. Dadurch kann beispielsweise die funktionale Schicht mit dem elektrischen Element direkt auf die Dekorfolie oder das Dekorpapier, aber auch genauso auf ein Dekoroberflächenlaminat oder allgemein das zumindest einschichtige Dekoroberflächenelement aufgebracht werden.

Einige weitere Ausführungsbeispiele gemäß der Erfindung beziehen sich auf die Realisierung der Integration auf zwei verschiedenen Wegen.

Bei der ersten Möglichkeit wird die funktionale Folie zunächst eigenständig auf einem separaten Substrat (Trägerfolie) realisiert und anschließend zusammen mit der Dekorfolie (Dekoroberflächenlaminat) und der Platte (Trägerschicht) beispielsweise in einem Kaschierprozess und/oder Laminierprozess verbunden.

Vorausgesetzt, diese Folie (das Dekoroberflächenlaminat) ist kompatibel zum Prozess der funktionalen Beschichtung (zur Herstellung der funktionalen Schicht), können alternativ zum eben erwähnten ersten Weg die Funktionselemente (das elektrische Element) auf der unbedruckten Seite der Dekorfolie (Rückseite oder zweite Seite) hergestellt werden. Dadurch kann ein darauffolgender Laminierprozess weitgehend ähnlich zum bereits oben erwähnten Standardfertigungsverfahren erfolgen. Dadurch kann der zusätzliche Aufwand zur Bereitstellung einer elektrischen Funktionalität sehr klein gehalten werden, und somit eine effiziente und kostengünstige Lösung zur Verfügung gestellt werden.

Einige Ausführungsbeispiele gemäß der Erfindung beziehen sich auf die Integration von Leiterbahnen. Hierzu können beispielsweise auf eine Folie Leiterbahnen mit den üblichen Verfahren der Leiterplattentechnik, Dünnfilmtechnik oder Drucktechnik erzeugt werden und anschließend z. B. in einer Tischplatte integriert werden. Man kann dadurch beispielsweise eine in der Tischplatte unter der Dekorfolie (Dekoroberflächenlaminat) versteckte Verkabelung (Verdrahtung) für verschiedenste Geräte realisieren. Durch die Integration über Folien (eine funktionale Schicht auf einer Trägerfolie oder direkt auf dem Dekoroberflächenlaminat) kann eine effiziente und kostengünstige Lösung, insbesondere bei komplexeren Verdrahtungsanforderungen, geschaffen werden.

Durch eine Verwendung eines zumindest teilweise intransparent oder undurchsichtigen Dekoroberflächenlaminates können elektrische Elemente unauffällig in Einrichtungsgegenständen integriert werden.

Die unter dem Dekoroberflächenlaminat, auch Dekorfolie genannt, versteckten Leiterbahnen können mit externen Komponenten verbunden werden, wofür sich als einfachste Lösung mechanische Steckverbindungen anbieten. Dadurch kann aber die äußere Integrität der Möbelplatte gestört werden. Um eine vollständig versteckte Verdrahtung zu erhalten, können beispielsweise elektrische Ströme induktiv über Spulen in diese eingekoppelt werden. Unter der Dekorfolie kann hierfür das Koppelelement als Planarspule ausgeführt werden, auf der Gegenseite kann ein Koppelelement z. B. in konventioneller Elektronik realisiert werden. Über derartige Elemente zur induktiven Einkopplung und Auskopplung können beispielsweise für den Außenstehenden vollkommen unsichtbare Verdrahtungssysteme realisiert werden.

Die integrierten Leiterbahnen können sowohl für die Stromversorgung elektrischer Geräte als auch zur Datenkommunikation zwischen elektronischen Geräten verwendet werden. Mögliche Anwendungsgebiete der beschriebenen Technik sind beispielhaft:
- die Verbindung für eine Vielzahl von Endgeräten wie Handy, Notebook usw. mit Stromleitungen und Datenleitungen ohne Oberflächenkabel;
- die kontaktlose Aufladung akkubetriebener Geräte;
- eine Vernetzung von Peripheriegeräten auf einem Schreibtisch mit einem Computer ohne störende Kabel;
- die Integration von berührungslos arbeitenden Schaltern in Oberflächen.

Bei einigen Ausführungsbeispielen gemäß der Erfindung ist die Herstellung von Leiterbahnen die Grundlage für die weitere Integration funktionaler Beschichtungen. Beispielsweise kann es möglich sein, auch optische oder sensorische Funktionsbeschichtungen in die Oberfläche von Möbelplatten einzubringen. Beispiele hierfür sind:
- Schaltfunktion "Touch-Switch" (Berührungsschalter, vergleichbar mit Touchpanel oder Berührungspanel);
- Sensorfunktionen, wie z. B. Temperatur in Küchenarbeitsplatten;
- Mikrofon, wie z. B. für Konferenzsaal-Möblierung ohne Oberflächenverkabelung;
- Leuchtfläche, wie beispielsweise eine Signallampe;
- ein Display (eine Anzeigevorrichtung) beispielsweise durch die Integration von organischen Leuchtdioden O-LED in einer Tischplatte.

Einige Ausführungsbeispiele gemäß der Erfindung beziehen sich auf eine Integration von weiteren elektronischen Komponenten. Dafür bieten sich beispielsweise Leichtbauplatten in Wabentechnik an. Diese sind aufgrund ihrer Bauweise bereits mit Hohlräumen versehen, die assemblierte Komponenten aufnehmen können, ohne auf der Dekorseite eine Oberflächentopographie zu erzeugen. In anderen Worten, sollen weitere elektronische Komponenten integriert werden, die aufgrund ihrer Größe oder ihres Aufbaus nicht sinnvoll durch Leiterplattentechnik oder Dünnfilmtechnik mit der funktionalen Schicht integriert werden können, können diese Komponenten in oder auf die Trägerschicht integriert werden. Die Trägerschicht kann dabei beispielsweise eine Leichtbauplatte in Wabentechnik sein.

Bei einigen Ausführungsbeispielen gemäß der Erfindung können die Eigenschaften des Dekoroberflächenlaminats an die elektrische Funktionalität des elektrischen Elements angepasst werden. Beispielsweise kann bei Leuchtflächen die Transparenz des Dekoroberflächenlaminats zwischen 0 und 100 % angepasst werden oder über einen Temperatursensor die thermische Leitfähigkeit erhöht werden. Genauso kann z. B. bei berührungssensitiven elektrischen Elementen die mechanische Verformbarkeit des Dekoroberflächenlaminats entsprechend angepasst werden.

Einige Ausführungsbeispiele gemäß der Erfindung beziehen sich auf integrierte Funktionsfolien in Laminatoberflächen.

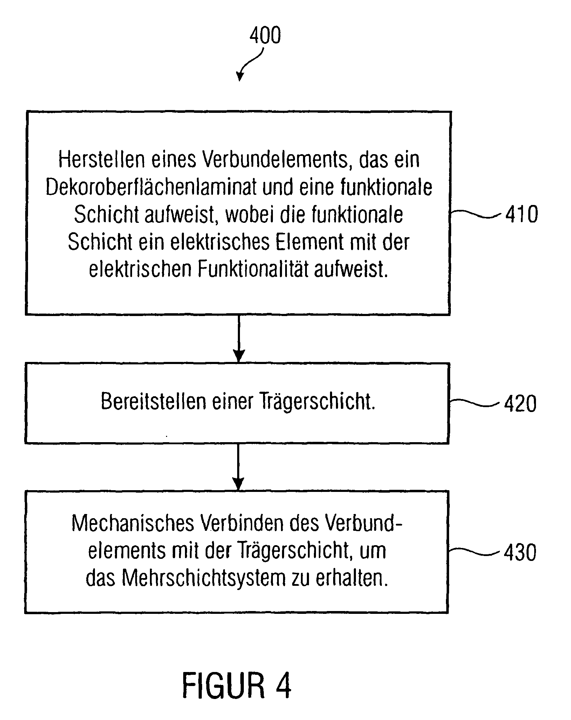

Fig. 4 zeigt ein Flussdiagramm eines Verfahrens 400 zur Herstellung eines Mehrschichtsystems zur Bereitstellung einer elektrischen Funktionalität für einen Einrichtungsgegenstand entsprechend einem Ausführungsbeispiel gemäß der Erfindung. Das Verfahren 400 umfasst ein Herstellen 410 eines Verbundelements, ein Bereitstellen 420 einer Trägerschicht und ein mechanisches Verbinden 430 des Verbundelements mit der Trägerschicht, um das Mehrschichtsystem zu erhalten.

Das hergestellte Verbundelement umfasst ein Dekoroberflächenlaminat und eine funktionale Schicht, wobei die funktionale Schicht ein elektrisches Element mit der elektrischen Funktionalität aufweist.

Zusammenfassend kann somit festgestellt werden, dass sich einige Ausführungsbeispiele auf einen Einrichtungsgegenstand mit einem Mehrschichtsystem zur Bereitstellung einer elektrischen Funktionalität beziehen, wobei der Einrichtungsgegenstand ein Verbundelement und eine Trägerschicht aufweist. Das Verbundelement weist ein Dekoroberflächenlaminat und eine funktionale Schicht auf, wobei die funktionale Schicht ein elektrisches Element mit der elektrischen Funktionalität aufweist, und wobei die Trägerschicht und das Verbundelement mechanisch verbunden sind.

Gemäß einem Aspekt der Erfindung entspricht eine erste Oberfläche des Dekoroberflächenlaminats einer Oberfläche des Einrichtungsgegenstands, wobei die funktionale Schicht auf einer zweiten Oberfläche des Dekoroberflächenlaminats angeordnet ist. Ferner kann das Verbundelement eine Trägerfolie aufweisen, wobei die funktionale Schicht auf der Trägerfolie angeordnet ist und wobei die Trägerfolie; mit der funktionalen Schicht zwischen dem Dekoroberflächenlaminat und der Trägerschicht angeordnet ist.

Bei einigen Ausführungsbeispielen ist das elektrische Element ein induktives Element, um mit einem Objekt an dem Einrichtungsgegenstand induktiv wechselzuwirken.

Des Weiteren kann das elektrische Element ein Schalter, ein Sensor, ein Mikrofon, ein Leuchtfeld, eine organische Leuchtdiode oder eine Anzeigevorrichtung sein.

Entsprechend eines weiteren Aspekts entspricht eine Oberfläche des Dekoroberflächenlaminats einer Oberfläche des Einrichtungsgegenstands und ist ausgelegt, um einen Druck, eine Temperatur, eine Temperaturänderung, ein akustisches Signal, ein elektrisches Signal oder ein optisches Signal von der Oberfläche des Einrichtungsgegenstands an das elektrische Element oder von dem elektrischen Element an die Oberfläche des Einrichtungsgegenstands weiterzugeben oder durchzulassen.

Bei weiteren Ausführungsbeispielen kann die Trägerschicht ein weiteres elektrisches Element aufweisen, wobei das weitere elektrische Element in oder auf der Trägerschicht angeordnet ist und mit dem elektrischen Element in der funktionalen Schicht elektrisch verbunden ist.

Ferner kann der Einrichtungsgegenstand ein Möbelstück, eine Wandverkleidung, eine Deckenverkleidung oder ein Fußbodenbelag sein.

Gemäß einem anderen Aspekt kann das elektrische Element ein Dünnfilmelement sein.

Einige Ausführungsbeispiele gemäß der Erfindung beziehen sich auf ein Verfahren zur Herstellung eines Mehrschichtsystems zur Bereitstellung einer elektrischen Funktionalität für einen Einrichtungsgegenstand. Dabei wird ein Verbundelement hergestellt, das ein Dekoroberflächenlaminat und eine funktionale Schicht aufweist, wobei die funktionale Schicht ein elektrisches Element mit der elektrischen Funktionalität aufweist. Ferner wird eine Trägerschicht bereitgestellt, wobei das Verbundelement mit der Trägerschicht mechanisch verbunden wird, um das Mehrschichtsystem zu erhalten.

Ferner kann eine erste Oberfläche des Dekoroberflächenlaminats einer Oberfläche des Mehrschichtsystems entsprechen und das Herstellen des Verbundelements ein Erzeugen der funktionalen Schicht mit dem elektrischen Element auf einer zweiten Oberfläche des Dekoroberflächenlaminats aufweisen, wobei die erste Oberfläche des Dekoroberflächenlaminats der zweiten Oberfläche des Dekoroberflächenlaminats gegenüber liegt.

Zusätzlich kann das Herstellen des Verbundelements durchgeführt werden, indem eine Trägerfolie bereitgestellt wird, die funktionale Schicht mit dem elektrischen Element auf der Trägerfolie erzeugt wird, und das Dekoroberflächenlaminat mit der Trägerfolie mit der funktionalen Schicht verbunden wird.

Des Weiteren kann das Erzeugen der funktionalen Schicht mit dem elektrischen Element in einer Leiterplattentechnik oder Dünnfilmtechnik erfolgen.

Einige weiteren Ausführungsbeispiele gemäß der Erfindung beziehen sich auf einen Einrichtungsgegenstand mit einem Mehrschichtsystem zur Bereitstellung einer elektrischen Funktionalität mit einem Verbundelement und einer Trägerschicht. Das Verbundelement weist ein Dekoroberflächenlaminat und eine funktionale Schicht auf, wobei die funktionale Schicht ein elektrisches Element mit der elektrischen Funktionalität aufweist, wobei eine erste Oberfläche des Dekoroberflächenlaminats einer Oberfläche des Einrichtungsgegenstands entspricht, und wobei die funktionale Schicht auf einer zweiten Oberfläche des Dekoroberflächenlaminats angeordnet ist. Die Trägerschicht und das Verbundelement sind mechanisch verbunden, wobei der Einrichtungsgegenstand ein Möbelstück, eine Wandverkleidung, eine Deckenverkleidung oder ein Fußbodenbelag ist.

Gemäß einem Aspekt der Erfindung ist das Dekoroberflächenlaminat (112) undurchsichtig.

In der vorliegenden Anmeldung werden teilweise für Objekte und Funktionseinheiten, die gleiche oder ähnliche funktionelle Eigenschaften aufweisen, gleiche Bezugszeichen verwendet.

Insbesondere wird darauf hingewiesen, dass abhängig von den Gegebenheiten, das erfindungsgemäße Schema auch in Software implementiert sein kann. Die Implementation kann auf einem digitalen Speichermedium, insbesondere einer Diskette oder einer CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt, kann die Erfindung somit als ein Computerprogramm mit einem Programmcode zur Durchführung des Verfahrens realisiert werden, wenn das Computerprogrammprodukt auf einem Computer abläuft.

Ein Ausführungsbeispiel der Erfindung schafft einen Einrichtungsgegenstand mit einem Mehrschichtsystem 100 zur Bereitstellung einer elektrischen Funktionalität, mit einem Verbundelement 110, das ein zumindest einschichtiges Dekoroberflächenelement 112 und eine funktionale Schicht 114 aufweist, wobei die funktionale Schicht 114 ein elektrisches Element 116 mit der elektrischen Funktionalität aufweist, wobei das elektrische Element 116 ein Dünnfilmelement ist, wobei eine erste Oberfläche des zumindest einschichtigen Dekoroberflächenelements 112 einer Oberfläche des Einrichtungsgegenstands entspricht, und wobei die funktionale Schicht 114 auf einer zweiten Oberfläche des zumindest einschichtigen Dekoroberflächenelements 112 angeordnet ist, und ferner einer Trägerschicht 120, wobei das Verbundelement 110 und die Trägerschicht 120 mechanisch verbunden sind, wobei der Einrichtungsgegenstand ein Möbelstück, eine Wandverkleidung, eine Deckenverkleidung oder ein Fußbodenbelag ist.

Bei dem Einrichtungsgegenstand ist das zumindest einschichtige Dekoroberflächenelement beispielsweise ein Dekoroberflächenlaminat. Ferner kann bei dem Einrichtungsgegenstand das zumindest einschichtige Dekoroberflächenelement eine einschichtige, bedruckte Folie oder ein einschichtiges bedrucktes Papier sein.

## Patentansprüche

1. Einrichtungsgegenstand mit einem Mehrschichtsystem (100) zur Bereitstellung einer elektrischen Funktionalität, mit folgenden Merkmalen:
einem Verbundelement (110), das ein zumindest einschichtiges Dekoroberflächenelement (112) und eine funktionale Schicht (114) aufweist, wobei die funktionale Schicht (114) ein elektrisches Element (116) mit der elektrischen Funktionalität aufweist, wobei das elektrische Element (116) ein Dünnfilmelement ist; und
einer Trägerschicht (120), wobei das Verbundelement (110) und die Trägerschicht (120) mechanisch verbunden sind.

2. Einrichtungsgegenstand gemäß Anspruch 1, wobei das zumindest einschichtige Dekoroberflächenelement ein Dekoroberflächenlaminat ist.

3. Einrichtungsgegenstand gemäß Anspruch 1, wobei das zumindest einschichtige Dekoroberflächenelement eine einschichtige, bedruckte Folie oder ein einschichtiges bedrucktes Papier ist.

4. Einrichtungsgegenstand gemäß einem der Ansprüche 1 bis 3, wobei eine erste Oberfläche des zumindest einschichtigen Dekoroberflächenelements (112) einer Oberfläche des Einrichtungsgegenstands entspricht, und wobei die funktionale Schicht (114) auf einer zweiten Oberfläche des zumindest einschichtigen Dekoroberflächenelements (112) angeordnet ist.

5. Einrichtungsgegenstand gemäß einem der Ansprüche 1 bis 4, wobei das Verbundelement (110) eine Trägerfolie (210) aufweist, wobei die funktionale Schicht (114) auf der Trägerfolie angeordnet ist und wobei die Trägerfolie mit der funktionalen Schicht (114) zwischen dem zumindest einschichtigen Dekoroberflächenelement (112) und der Trägerschicht (120) angeordnet ist.

6. Einrichtungsgegenstand gemäß einem der Ansprüche 1 bis 5, wobei das elektrische Element ein induktives Element ist, um mit einem Objekt an dem Einrichtungsgegenstand induktiv wechselzuwirken.

7. Einrichtungsgegenstand gemäß einem der Ansprüche 1 bis 5, wobei das elektrische Element ein Schalter, ein Sensor, ein Mikrofon, ein Leuchtfeld, eine organische Leuchtdiode oder eine Anzeigevorrichtung ist.

8. Einrichtungsgegenstand gemäß einem der Ansprüche 1 bis 7, wobei eine Oberfläche des zumindest einschichtigen Dekoroberflächenelements (112) einer Oberfläche des Einrichtungsgegenstands entspricht und ausgelegt ist, um einen Druck, eine Temperatur, eine Temperaturänderung, ein akustisches Signal, ein elektrisches Signal oder ein optisches Signal von der Oberfläche des Einrichtungsgegenstands an das elektrische Element oder von dem elektrischen Element an die Oberfläche des Einrichtungsgegenstands weiterzugeben oder durchzulassen.

9. Einrichtungsgegenstand gemäß einem der Ansprüche 1 bis 8, wobei die Trägerschicht (120) ein weiteres elektrisches Element aufweist, wobei das weitere elektrische Element in oder auf der Trägerschicht (120) angeordnet ist und mit dem elektrischen Element (116) in der funktionalen Schicht (114) elektrisch verbunden ist.

10. Einrichtungsgegenstand gemäß einem der Ansprüche 1 bis 9, wobei der Einrichtungsgegenstand ein Möbelstück, eine Wandverkleidung, eine Deckenverkleidung oder ein Fußbodenbelag ist.

11. Verfahren (400) zur Herstellung eines Mehrschichtsystems zur Bereitstellung einer elektrischen Funktionalität für einen Einrichtungsgegenstand mit folgenden Schritten:
Herstellen (410) eines Verbundelements, das zumindest einschichtiges Dekoroberflächenelement und eine funktionale Schicht aufweist, wobei die funktionale Schicht ein elektrisches Element mit der elektrischen Funktionalität aufweist, wobei das Erzeugen der funktionalen Schicht mit dem elektrischen Element in einer Leiterplattentechnik oder Dünnfilmtechnik erfolgt;
Bereitstellen (420) einer Trägerschicht; und
mechanisches Verbinden (430) des Verbundelements mit der Trägerschicht, um das Mehrschichtsystem zu erhalten.

12. Verfahren zur Herstellung eines Mehrschichtsystems gemäß Anspruch 11, wobei eine erste Oberfläche des zumindest einschichtigen Dekoroberflächenelements einer Oberfläche des Mehrschichtsystems entspricht und wobei das Herstellen (410) des Verbundelements ein Erzeugen der funktionalen Schicht mit dem elektrischen Element auf einer zweiten Oberfläche des zumindest einschichtigen Dekoroberflächenelements aufweist, wobei die erste Oberfläche des zumindest einschichtigen Dekoroberflächenelements der zweiten Oberfläche des zumindest einschichtigen Dekoroberflächenelements gegenüber liegt.

13. Verfahren zur Herstellung eines Mehrschichtsystems gemäß Anspruch 11, wobei das Herstellen (410) des Verbundelements folgende Schritte aufweist:
Bereitstellen einer Trägerfolie;
Erzeugen der funktionalen Schicht mit dem elektrischen Element auf der Trägerfolie; und
Verbinden des zumindest einschichtigen Dekoroberflächenelements mit der Trägerfolie mit der funktionalen Schicht.

14. Computerprogramm mit einem Programmcode zur Durchführung eines Verfahrens gemäß einem der Ansprüche 11 bis 13, wenn das Computerprogramm auf einem Computer oder Mikrocontroller abläuft.

15. Einrichtungsgegenstand gemäß einem der Ansprüche 1 bis 10, wobei das zumindest einschichtige Dekoroberflächenelement (112) undurchsichtig ist.

## Claims

1. Fitment having a multilayer system (100) for providing electric functionality, comprising:
a composite element (110) comprising an at least single-layered decoration surface element (112) and a functional layer (114), wherein the functional layer (114) comprises an electric element (106) having the electric functionality, wherein the electric element (116) is a thin-film element; and
a support layer (120), wherein the composite element (110) and the support layer (120) are mechanically connected.

2. Fitment according to claim 1, wherein the at least single-layered decoration surface element is a decoration surface laminate.

3. Fitment according to claim 1, wherein the at least single-layered decoration surface element is a single-layered printed foil or a single-layered printed paper.

4. Fitment according to one of claims 1 to 3, wherein a first surface of the at least single-layered decoration surface element (112) corresponds to a surface of the fitment, and wherein the functional layer (114) is arranged on a second surface of the at least single-layered decoration surface element (112).

5. Fitment according to one of claims 1 to 4, wherein the composite element (110) comprises a support foil (210), wherein the functional layer (114) is arranged on the support foil and wherein the support foil with the functional layer (114) is arranged between the at least single-layered decoration surface element (112) and the support layer (120).

6. Fitment according to one of claims 1 to 5, wherein the electric element is an inductive element to inductively interact with an object on the fitment.

7. Fitment according to one of claims 1 to 5, wherein the electric element is a switch, a sensor, a microphone, a luminous field or an organic light emitting diode or a display device.

8. Fitment according to one of claims 1 to 7, wherein a surface of the at least single-layered decoration surface element (112) corresponds to a surface of the fitment and is implemented to transmit or pass a pressure, a temperature, a change of temperature, an acoustic signal, an electric signal or an optical signal from the surface of the fitment to the electric element or from the electric element to the surface of the fitment.

9. Fitment according to one of claims 1 to 9, wherein the support layer (120) comprises a further electric element, wherein the further electric element is arranged in or on the support layer (120) and electrically connected to the electric element (116) in the functional layer (114).

10. Fitment according to one of claims 1 to 9, wherein the fitment is a piece of furniture, a wall covering, a ceiling covering or a floor covering.

11. Method (400) for producing a multilayer system for providing an electric functionality for a fitment, comprising the steps of:
producing (410) a composite element comprising an at least single-layered decoration surface element and a functional layer, wherein the functional layer comprises an electric element having the electric functionality, wherein generating the functional layer with the electric element is made in a printed circuit board technology or a thin-film technology;
providing (420) a support layer; and
mechanically connecting (430) the composite element with the support layer to obtain the multilayer system.

12. Method for producing a multilayer system according to claim 11, wherein a first surface of the at least single-layered decoration surface element corresponds to a surface of the multilayer system, and wherein producing (410) the composite element comprises generating the functional layer with the electric element on a second surface of the at least single-layered decoration surface element, wherein the first surface of the at least single-layered decoration surface element opposes the second surface of the at least single-layered decoration surface element.

13. Method for producing a multilayer system according to claim 11, wherein producing (410) the composite element comprises:
providing a support foil;
generating the functional layer with the electric element on the support foil; and
connecting the at least single-layered decoration surface element with the support foil to the functional layer.

14. Computer program having a program code for performing a method according to one of claims 11 to 13, when the computer program runs on a computer or microcontroller.

15. Fitment according to one of claims 1 to 10, wherein the at least single-layered decoration surface element (112) is opaque.

## Revendications

1. Objet d'aménagement avec un système multicouche (100) destiné à fournir une fonctionnalité électrique, aux caractéristiques suivantes:
un élément composite (110) qui présente au moins un élément superficiel décoratif monocouche (112) et une couche fonctionnelle (114), la couche fonctionnelle (114) présentant un élément électrique (116) avec la fonctionnalité électrique, l'élément électrique (116) étant un élément en mince film; et
une couche de support (120), l'élément composite (110) et la couche de support (120) étant assemblés mécaniquement.

2. Objet d'aménagement selon la revendication 1, dans lequel l'élément superficiel décoratif au moins monocouche est un laminé superficiel décoratif.

3. Objet d'aménagement selon la revendication 1, dans lequel l'élément superficiel décoratif au moins monocouche est un film monocouche imprimé ou un papier monocouche imprimé.

4. Objet d'aménagement selon l'une des revendications 1 à 3, dans lequel une première surface de l'élément superficiel décoratif au moins monocouche (112) correspond à une surface de l'élément d'aménagement, et dans lequel la couche fonctionnelle (114) est disposée sur une deuxième surface de l'élément superficiel décoratif au moins monocouche (112).

5. Elément d'aménagement selon l'une des revendications 1 à 4, dans lequel l'élément composite (110) présente un film de support (210), dans lequel la couche fonctionnelle (114) est disposée sur le film de support et dans lequel le film de support est disposé avec la couche fonctionnelle (114) entre l'élément superficiel décoratif au moins monocouche (112) et la couche de support (120).

6. Objet d'aménagement selon l'une des revendications 1 à 5, dans lequel l'élément électrique est un élément inductif, pour interagir de manière inductive avec un objet sur l'élément d'aménagement.

7. Objet d'aménagement selon l'une des revendications 1 à 5, dans lequel l'élément électrique est un interrupteur, un capteur, un microphone, un voyant lumineux, une diode électroluminescente organique ou un dispositif d'affichage.

8. Objet d'aménagement selon l'une des revendications 1 à 7, dans lequel une surface de l'élément superficiel décoratif au moins monocouche (112) correspond à une surface de l'objet d'aménagement et est conçue pour transmettre ou laisser passer une pression, une température, une variation de température, un signal acoustique, un signal électrique ou un signal optique de la surface de l'élément d'aménagement à l'élément électrique ou de l'élément électrique à la surface de l'objet d'aménagement.

9. Objet d'aménagement selon l'une des revendications 1 à 8, dans lequel la couche de support (120) présente un autre élément électrique, dans lequel l'autre élément électrique est disposé dans ou sur la couche de support (120) et est connecté électriquement à l'élément électrique (116) dans la couche fonctionnelle (114).

10. Objet d'aménagement selon l'une des revendications 1 à 9, dans lequel l'objet d'aménagement est un meuble, un revêtement de paroi, un revêtement de plafond ou un revêtement de sol.

11. Procédé (400) de fabrication d'un système multicouche destiné à fournir une fonctionnalité électrique pour un objet d'aménagement, aux étapes suivantes consistant à:
réaliser (410) un élément composite qui présente un élément superficiel décoratif au moins monocouche et une couche fonctionnelle, la couche fonctionnelle présentant un élément électrique avec la fonctionnalité électrique, la génération de la couche fonctionnelle avec l'élément électrique ayant lieu selon une technique de plaque de conducteurs ou une technique de mince film;
préparer (420) une couche de support; et
assembler mécaniquement (430) l'élément composite avec la couche de support, pour obtenir le système multicouche.

12. Procédé de fabrication d'un système multicouche selon la revendication 11, dans lequel une première surface de l'élément superficiel décoratif au moins monocouche correspond à une surface du système multicouche et dans lequel la réalisation (410) de l'élément composite présente une génération de la couche fonctionnelle avec l'élément électrique sur une deuxième surface de l'élément superficiel décoratif au moins monocouche, dans lequel la première surface de l'élément superficiel décoratif au moins monocouche de la deuxième surface se situe opposée à la deuxième surface de l'élément superficiel décoratif au moins monocouche.

13. Procédé de fabrication d'un système multicouche selon la revendication 11, dans lequel la réalisation (410) de l'élément composite présente les étapes suivantes consistant à:
préparer un film de support;
générer la couche fonctionnelle avec l'élément électrique sur le film de support; et
assembler l'élément superficiel décoratif au moins monocouche avec le film de support avec la couche fonctionnelle.

14. Programme d'ordinateur avec un code de programme pour réaliser un procédé selon l'une des revendications 11 à 13 lorsque le programme d'ordinateur est exécuté sur un ordinateur ou un microcontrôleur.

15. Objet d'aménagement selon l'une des revendications 1 à 10, dans lequel l'élément superficiel décoratif au moins monocouche (112) est opaque.
